# EUROPEAN PATENT APPLICATION

(11) **EP 4 138 187 A1**
(43) Date of publication of application: **22.02.2023**
(21) Application number: 21191693.7
(22) Date of filing: 17.08.2021
(51) Int. Cl.: H01M 50/20, H01M 50/572

(54) **BATTERY SYSTEM FOR AN ELECTRIC VEHICLE**

(71) Applicant: Samsung SDI Co., Ltd., Yongin-si, Gyeonggi-do 17084 (KR)
(72) Inventor: Koeppel, Andreas, 8144 Haselsdorf-Tobelbad (AT); Haring, Fritz, 8600 Bruck a. d. Mur (AT); Bauer, Michael, 8073 Feldkirchen bei Graz (AT)
(74) Representative: Gulde & Partner

(57) **Abstract**

The present disclosure refers to a battery system for an electric vehicle, the battery system comprising at least one high voltage component and a touch protection element for protecting a user from accidentally contacting the high voltage component, wherein the touch protection element comprises a pivotably mounted isolating flap (12), the isolating flap (12) being pivotable between a blocking position where it blocks access to the at least one high voltage component and an access position where it allows access to the at least one high voltage component, wherein the isolating flap (12) is adapted such that if a sufficient force is applied to the isolating flap (12) in the blocking position, the isolating flap (12) pivots into the access position towards the high voltage component.

## Description

### Field of the Disclosure

The present invention relates to a battery system for an electric vehicle comprising a high voltage component and a touch protection element for protecting a user from accidentally contacting the high voltage component. The invention further relates to an electric vehicle comprising such a battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module. Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

In electric vehicles the battery system usually comprises a high voltage battery formed by said battery packs, the high voltage battery working as a traction battery for the propulsion of the electric vehicle. Such high voltages usually exceed 60 V. The high voltage battery and further electrical components connected to the high voltage battery, in particular components of a high voltage board net of the vehicle, carry voltages high enough to endanger humans. For example, an operator of the vehicle or a service person may get injured if one comes into contact with a live part under high voltage.

Therefore, battery systems for electric vehicles comprise touch protection elements that protect a user from accidentally coming in contact with the high voltage component. Many such high voltage components have to be accessible for the user, however, in particular for maintenance or service reasons, which necessitates the removal of the respective touch protection element. Therefore, for such high voltage components the touch protection elements need to be removable and preferably reusable so that they can be attached to the high voltage component again after the maintenance procedure is finished.

As of now such touch protection elements are mostly applied manually to the high voltage carrying component. The high voltage component may e.g. be a busbar screw connection and the touch protection element a separate/loose isolating cap that can be put over the screw connection. To provide access to the busbar screw connection (e.g. to screw or unscrew the connection) the isolating cap needs to be removed manually. Also, even if the screwing process itself is done automated, the subsequent application of the isolating cap has to be done manually by an operator. In particular for this reason the known touch protections for screwing connection are only proof according to the IPXXB standard. Furthermore, this is a safety relevant process and documentation of manual processes is critical. Also, there is the risk of losing the touch protection, especially in case of service.

DE 10 2019 128 434 B3 describes a high-voltage battery comprising multiple battery modules with interfaces covered with flaps, wherein when a connector is moved towards one of the interfaces the flaps are pushed in an open position by the connector away from the interface thereby providing an opening in between the flaps so that the connector can access the interface. Such a construction is complex and error-prone, in particular because of the specific movement of the flaps away from the interface.

It is thus an object of the present disclosure to overcome or reduce at least some of the drawbacks of the prior art and to provide a battery system for an electric vehicle comprising sufficient protection from high voltage components while still allowing, in a simple manner, access to such components.

### Summary of Invention

Embodiments of the present disclosure seek to solve at least one of the problems existing in the prior art to at least some extent.

In particular, the battery system according to the invention comprises at least one high voltage component and a touch protection element for protecting a user from accidentally contacting the high voltage component, wherein the touch protection element comprises a pivotably mounted isolating flap, the isolating flap being pivotable between a blocking position where it blocks access to the at least one high voltage component and an access position where it allows access to the at least one high voltage component, wherein the isolating flap is adapted such that if a sufficient force is applied to the isolating flap in the blocking position, the isolating flap pivots into the access position towards the high voltage component.

The battery system may comprise a high voltage battery, in particular a high voltage traction battery of the electric vehicle which serves to propel the electric vehicle. The high voltage battery itself and/or any component in electrical contact with the battery may be understood as a high voltage component. Such high voltage components need to be isolated to not endanger a user while at least some of these high voltage components need to be accessible, e.g. for maintenance, as explained above. The touch protection element according to the invention is provided to allow such access one the one hand but on the other hand to prevent the user from accidentally contacting the high voltage component, e.g. with the finger of a hand.

This is achieved via an isolating flap that in a blocking position prevents such accidental contact by preventing access to the high voltage component, e.g. by covering the high voltage component. In the blocking position access to the high voltage component is blocked at least in so far that no accidental contact can occur. In other words, the isolating flap may be adapted to withstand, in the blocking position, forces acting to pivot the isolating flap towards the access position in a magnitude that usually occurs when the isolating flap is accidentally touched by the finger or hand of a person. If, however, a sufficiently high force is applied to the isolating flap in the blocking position, the isolating flap pivots into the access position thereby allowing access to the high voltage component. Thereby, according to the invention, the isolating flap pivots towards the high voltage component, not away from it. In other words, a distance between the isolating flap and the high voltage component is reduced via this movement so that in the access position at least parts of the isolating flap are closer to the high voltage component than in the blocking position. In particular, the isolating flap can be pivoted towards the high voltage component, e.g. via a tool, to move the isolating flap from the blocking position into the access position. The isolating flap may work as an electrically insulating member, may in particular be made of an electrically non-conductive material.

Such an inventive isolating flap has a number of advantages over the prior art. First of all, such an isolating flap allows an easy access to the high voltage component while still allowing for sufficient protection against accidental contact. In contrast to separate or loose touch protection elements, as the one covering the busbar screw connection mentioned in the introduction, the isolating flap according to the invention does not need to be removed from the high voltage component to allow access to the high voltage component. To the contrary, the mounted isolating flap may always stay in connection to the part it is mounted to, e.g. an isolation member arranged at or near the high voltage component, only pivoting away so as to allow access to the high voltage component. This allows for easier access to the high voltage component and also prevents accidental loss of the touch protection element. In particular a manual removal of the touch protection element is no longer necessary which reduces the effort of service and documentation. Further, the isolating flap can be configured to fulfill not only the IPXXB but higher standards, in particular the IPXXD standard which raises the safety level. Also, as the isolating flap pivots towards the high voltage component, not away from it, when being moved from the blocking position into the access position the battery system according to the invention is less complex and less error-prone as touch protection elements of the prior art.

According to an embodiment the isolating flap is preloaded into the blocking position. Thanks to the preloading the isolating flap always moves back to the blocking position after being pivoted out of that position. Thus, when a force applied to the isolating flap is no longer sufficiently high to pivot the isolating flap into the access position, e.g. because the tool has been removed, the isolating flap snaps back into the blocking position. In particular, the isolating flap is preloaded into the blocking position with a force of more than 1 N. In other words, the isolating flap may be adapted such that the isolating flap pivots from the blocking position into the access position towards the high voltage component only if a force of more than 1 N is applied to the isolating flap at a right angle. Thus, according to this embodiment, a force of more than 1 N needs to be applied in a right angle to the isolating flap to pivot the isolating flap from the blocking position to the access position. This force can be exerted by a force applying tool, e.g. a screw driver, as mentioned above. The force applying tool can thus reach the high voltage component by pivoting the isolating flap towards the high voltage component into the access position. The isolating flap having a resistance against such a force is sufficient to prevent accidental contact of a user with the high voltage component. In particular, such a resistance is sufficient to fulfil the IPXXD requirements.

According to an embodiment the isolating flap is integrally mounted to an isolation member. The isolating flap being integrally mounted to the isolation member may be understood as the isolating flap being captively or undetachably mounted to the isolation member, at least with respect to non-destructive forces. Such a connection with the isolation member is particularly secure and sufficiently prevents accidental detachment. According to a respective embodiment the isolating flap is mounted to the isolation member via an integral hinge, the integral hinge meaning a flexure bearing, in particular a living hinge in the sense of a thin flexible hinge made from the same material as the two pieces it connects. Thus, the isolation member and the isolating flap may be undetachable parts of the same element, may in particular be made of the same material. The term "mounted" in this regard may be understood as "connected to". Such a connection between the isolating flap and the isolation member is particularly secure as it further lowers the risk of losing the touch protection element in particular during service or maintenance. The isolation member is isolating the high voltage component. It may form a carrying part for carrying, i.e. supporting, the isolating flap.

According to an embodiment the isolation member isolating the high voltage component comprises an access opening that is covered by the isolating flap in the blocking position and uncovered in the access position. The isolation member isolates the high voltage component with respect to its surroundings thereby providing an electrical insulation. The high voltage component, however, is accessible via the access opening, e.g. for maintenance. This access opening is covered via the isolating flap according to the invention so as to protect a user from accidentally coming into contact with the high voltage component thorough the access opening. The isolating flap may be pivotably mounted to the isolation member as explained above, the isolation member working as a carrying part. Such an access opening can be covered particularly simply and securely with the isolating flap according to the invention. According to a respective embodiment the access opening is an opening for inserting a force applying instrument, in particular a screwdriver. The opening may thus have an opening width allowing for the respective instrument to be inserted and to access the high voltage part.

The invention also pertains to an electric vehicle comprising a battery system as explained above.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates an isolating flap according to the invention and an isolation member carrying the isolating flap, the isolating flap being in the blocking position,
- Fig. 2: illustrates the isolating flap in the access position.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the following description of embodiments of the present disclosure, the terms of a singular form may include plural forms unless the context clearly indicates otherwise.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

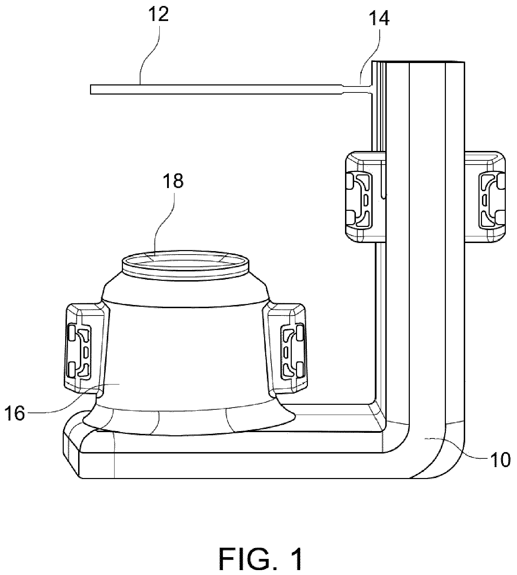

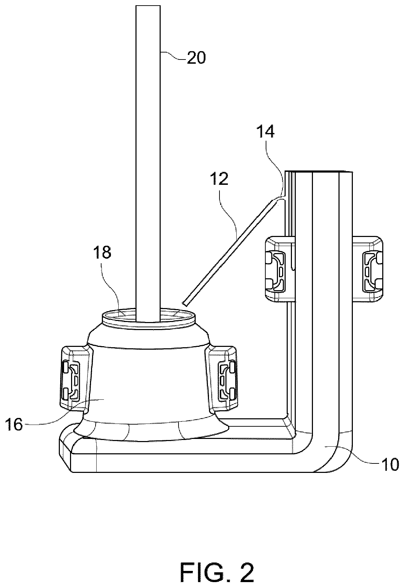

Figs. 1 and 2 show a part of the battery system comprising an isolating flap 12 and an isolation member 10 carrying the isolating flap 12 at a vertical section thereof, the isolation member 10 thus forming a carrying part for the isolating flap. The isolating flap 12 is mounted to the isolation member 10 pivotably via an integral hinge 14. The isolation member 10 further has a horizontal section comprising a receptacle 16 for a busbar screw connection (not shown), the receptacle 16 having an opening 18 for accessing the busbar screw connection. The busbar screw connection is a high voltage component which carries a high voltage under operation conditions due to its electrical connection to the HV board net and thus the HV traction battery of the electric vehicle.

The isolating flap 12 is pivotable via the integral hinge 14 relative to the isolation member 10 between a blocking position where it blocks access to the busbar screw connection and an access position where it allows access to the busbar screw connection.

The isolating flap 12 can be seen in Fig. 1 in its blocking position where it blocks access to the opening 18 of the receptacle 16 and therefore to the busbar screw connection. The isolating flap 12 is preloaded into this blocking position with a force of more than 1 N (Newton). In this blocking position the isolating flap 12 covers the opening 18 and thus protects a person from coming into contact with the busbar screw connection accidentally. To overcome the preloading, one would have to apply a force of greater than 1 N to the isolating flap 12 at a right angle with respect to an extension plane of the isolating flap 12. This is usually not the case when accidentally touching the isolating flap 12 e.g. with the finger of a hand.

In Fig. 2 the isolating flap 12 can be seen in its access position where it allows access to the opening 18 of the receptacle 16 and therefore to the busbar screw connection. The isolating flap 12 has been pivoted into the access position by a screwdriver 20 via which a force of larger than 1 N has been applied at a right angle to the isolating flap 12 so that the isolating flap 12 was pushed away thereby pivoting towards the receptacle 16 and therefore towards the busbar screw connection. With the screwdriver 20 the busbar screw connection can thus be reached and serviced. When removing the screwdriver from the busbar screw connection and thus the receptacle 16 the isolating flap 12 will automatically enter the blocking position again due to its preloading.

Thus, the isolating flap allows an easy access to the busbar screw connection while still allowing for sufficient protection against accidental contact. In contrast to separate or loose touch protection elements, as e.g. an isolating cap the covering the busbar screw connection, the isolating flap according to the invention does not need to be removed from the busbar screw connection to allow access to the busbar screw connection. To the contrary, the mounted isolating flap always stays in connection with the isolation member, but only pivots away so as to allow access to the busbar screw connection. This allows for easier access to the busbar screw connection and also prevents accidental loss of the touch protection element. In particular, no manually removable touch protection element as e.g. a isolating cap is required. Further, the isolating flap fulfills not only the IPXXB but the IPXXD standard thanks to it withstanding more than 1 N.

### Reference signs

- 10: isolation member
- 12: isolating flap
- 14: integral hinge
- 16: receptacle
- 18: opening
- 20: screwdriver

## Claims

1. A battery system for an electric vehicle, the battery system comprising at least one high voltage component and a touch protection element for protecting a user from accidentally contacting the high voltage component, wherein the touch protection element comprises a pivotably mounted isolating flap (12), the isolating flap (12) being pivotable between a blocking position where it blocks access to the at least one high voltage component and an access position where it allows access to the at least one high voltage component, wherein the isolating flap (12) is adapted such that if a sufficient force is applied to the isolating flap (12) in the blocking position, the isolating flap (12) pivots into the access position towards the high voltage component.

2. The battery system of claim 1, wherein the isolating flap (12) is preloaded into the blocking position.

3. The battery system of claim 2, wherein the isolating flap (12) is preloaded into the blocking position with a force of at least 1 N.

4. The battery system of one of the preceding claims, wherein the isolating flap (12) is integrally mounted to an isolation member (10).

5. The battery system of claim 4, wherein the isolating flap (12) is mounted to the isolation member (10) via an integral hinge (14).

6. The battery system of one of the preceding claims, wherein the isolation member (10) comprising an access opening (18) that is covered by the isolating flap (12) in the blocking position and uncovered in the access position.

7. The battery system of claim 6, wherein the access opening (18) is an opening for inserting a force applying instrument, in particular a screwdriver (20).

8. The battery system of one of the preceding claims, wherein the battery system comprises a high voltage traction battery for the electric vehicle.

9. An electric vehicle comprising a battery system according to one of the preceding claims.

## Amended claims

### Amended claims in accordance with Rule 137(2) EPC.

1. A battery system for an electric vehicle, the battery system comprising at least one high voltage component and a touch protection element for protecting a user from accidentally contacting the high voltage component, wherein the touch protection element comprises an isolation member (10) comprising a receptacle (16) having an opening (18), and a pivotably mounted isolating flap (12), the isolating flap (12) being pivotable to the isolation member (10) between a blocking position where it blocks access to the at least one high voltage component and an access position where it allows access to the at least one high voltage component.

2. The battery system of claim 1, wherein the isolating flap (12) is preloaded into the blocking position.

3. The battery system of claim 2, wherein the isolating flap (12) is preloaded into the blocking position with a force of at least 1 N.

4. The battery system of one of the preceding claims, wherein the isolating flap (12) is integrally mounted to the isolation member (10).

5. The battery system of claim 4, wherein the isolating flap (12) is mounted to the isolation member (10) via an integral hinge (14).

6. The battery system of one of the preceding claims, wherein the isolation member (10) comprises an access opening (18) that is covered by the isolating flap (12) in the blocking position and uncovered in the access position.

7. The battery system of claim 6, wherein the access opening (18) is an opening having an opening width allowing for a force applying instrument, in particular a screwdriver (20), to be inserted into the access opening (18) to access the high voltage part.

8. The battery system of one of the preceding claims, wherein the battery system comprises a high voltage traction battery for the electric vehicle.

9. An electric vehicle comprising a battery system according to one of the preceding claims.
